(19) Europäisches Patentamt
European Patent Office
Office européen des brevets

(11) **EP 3 831 193 A1**

(12) **EUROPEAN PATENT APPLICATION**

(43) Date of publication:
**09.06.2021 Bulletin 2021/23**

(51) Int Cl.:
**A01G 3/08** *(2006.01)* **B25D 11/06** *(2006.01)*

(21) Application number: **20211303.1**

(22) Date of filing: **02.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **02.12.2019 CN 201911211827**

(71) Applicant: **Techtronic Cordless GP**
**Anderson, SC 29621 (US)**

(72) Inventors:
• **WEI, An Wei**
  **Dongguan City, Guangdong (CN)**
• **ZHENG, Li Da**
  **Dongguan City, Guangdong (CN)**
• **FAN, Frankie Lam Kwok**
  **Kawi Chung, Hong Kong SAR (China) (CN)**

(74) Representative: **Grünecker Patent- und Rechtsanwälte**
**PartG mbB**
**Leopoldstraße 4**
**80802 München (DE)**

(54) **ELECTRIC PRUNER SAW**

(57)     The present invention provides an electric pruner saw, comprising a motor (12), a wobble bearing (13) and a saw (14, 15), and further comprising a balancing component (21); the balancing component (21) and saw (14,15) vibrate at the same frequency in parallel directions, but the phases of vibration of the balancing component (21) and saw (14,15) differ by 180°, such that the opposite-phase vibration of the balancing component (21) partially or completely offsets the vibration of the saw (14,15). Furthermore, the wobble bearing (13) in the pruner saw may be arranged at an upper side of the motor (12), such that a rotating rod (16) of the pruner saw is located between the motor (12) and a saw rod (15); thus, the wobble bearing (13) is closer to the saw rod (15), so the length of a swing rod ()17 of the wobble bearing (13) is shortened, and consequently the various components are arranged more compactly, thus reducing the volume of the pruner saw.

Fig. 3A

EP 3 831 193 A1

**Description**

**Technical field**

The present invention relates to a pruning tool, in particular to an electric pruner saw.

**Background art**

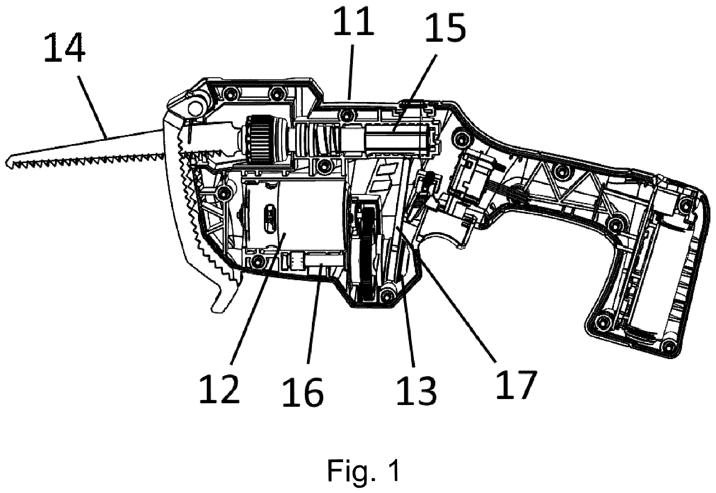

An electric pruner saw is a convenient tool for pruning bushes or other trees to beautify the environment. Fig. 1 shows an electric pruner saw in the prior art, comprising: a handle, a main body part and a saw. The main body part comprises: a housing 11, and a motor 12 and a wobble bearing 13 which are arranged in the housing 11. The saw (14, 15) extends from inside the housing 11 to outside the housing 11. The saw comprises two parts, namely a saw blade 14 and a saw rod 15; the columnar saw rod 15 is arranged in the pruner saw housing 11, and an extremity of the saw blade 14 is fixed to a front end of the saw rod 15. The saw blade 14 extends forwards out of the pruner saw housing 11 from the front end of the saw rod 15. When the motor 12 is connected to a power supply, an output shaft of the motor rotates, and drives the wobble bearing 13 to move by means of a transmission mechanism (two gears meshed with each other are shown demonstratively in fig. 1). Teeth of the wobble bearing 13 convert rotational motion of the motor output shaft into linear reciprocating motion. The wobble bearing 13 comprises a rotating rod 16, a joint part, and a swing rod 17 extending outwards from an outer surface of the joint part; the swing rod 17 is coupled to the rotating rod 16 via the joint part. A gear is fixed to the rotating rod 16; this gear is meshed with a gear on the output shaft of the motor 12, and transfers rotation of the output shaft of the motor 12 to the rotating rod 16, such that the rotating rod 16 also correspondingly rotates. The swing rod 17 coupled to the rotating rod 16 via the joint part swings back and forth as the rotating rod 16 rotates. A spherical far end of the swing rod 17 is rotatably coupled to the saw rod 15, and the swinging of the swing rod 17 back and forth drives the saw rod 15 (and thus drives the saw blade 14) in reciprocating linear motion, i.e. vibration, in an axial direction of the saw rod 15; the saw blade 14 is thereby used to cut tree leaves and branches, etc.

It is clear from the operating principle of the electric pruner saw above that when the pruner saw is operating, the saw will generate considerable vibration. When an operator holds the electric pruner saw in his/her hands to prune bushes, etc., large-amplitude vibration of the pruner saw makes it difficult for the operator to control the movement direction of the pruner saw when pruning bushes or sawing wood, and furthermore is likely to harm the operator's arm bones and joints; in addition, long periods of vibration cause a person's muscles to suffer fatigue, thus shortening the operator's working time.

Thus, there is a need for an improved pruner saw with reduced vibration.

Furthermore, there is also a need for a pruner saw with a reduced volume, not only to make carrying easier, but also so that it takes up less space when stored in a warehouse or toolbox.

**Summary of the invention**

In response to the abovementioned shortcomings of an existing pruner saw, the inventors of the present invention have created the present invention.

According to one aspect of the present invention, a balancing component is added to an electric pruner saw; the balancing component and a saw vibrate at the same frequency in parallel directions, but the phases of vibration of the balancing component and saw differ by 180°, such that the opposite-phase vibration of the balancing component partially or completely offsets the vibration of the saw.

According to another aspect of the present invention, a wobble bearing in the pruner saw is arranged at an upper side of a motor, such that a rotating rod of the pruner saw is located between the motor and a saw rod; thus, the wobble bearing is closer to the saw rod, so the length of a swing rod of the wobble bearing is shortened, and consequently the various components are arranged more compactly, thus reducing the volume of the pruner saw.

According to an embodiment of the present invention, an electric pruner saw is provided, comprising a motor (12), a wobble bearing (13) and a saw (14, 15), wherein the wobble bearing (13) comprises a rotating rod (16) and a swing rod (17), and the motor (12) can drive the rotating rod (16) to rotate via a transmission mechanism, and in turn drive the swing rod (17) to swing back and forth in a plane, thereby driving the saw (14, 15) to vibrate linearly; and the electric pruner saw further comprises a balancing component (21), the balancing component (21) comprising a track (21-2), a slider (21-3) and a protrusion (21-1) mounted to the slider in a fixed manner, the protrusion (21-1) protruding from a surface of the slider (21-3), and the track (21-2) limiting movement of the slider (21-3) and protrusion (21-1), such that the slider (21-3) and protrusion (21-1) move linearly along the track (21-2) in a direction parallel to a movement direction of the saw, wherein an annular groove (16-1) is formed on an outer surface of the rotating rod (16), the annular groove (16-1) being formed obliquely relative to the rotating rod (16); the balancing component (21) is arranged close to the rotating rod (16), such that the protrusion (21-1) is inserted into the groove (16-1), and under the driving action of the motor (12), when the rotating rod (16) rotates, a wall of the groove (16-1) pushes the protrusion (21-1), such that the slider (21-3) and the protrusion (21-1) vibrate linearly along the track (21-2), wherein the slider (21-3) and the saw (14, 15) have the same frequency of vibration, but the vibration of the slider (21-3) and the vibration of the saw (14, 15) differ in phase by 180°.

According to another preferred embodiment of the present invention, an electric pruner saw is provided, wherein the saw (14, 15) is arranged at an upper side of the motor (12), and the balancing component (21) and the wobble bearing (13) are also arranged at the upper side of the motor (12), such that the balancing component (21) and the rotating rod (16) of the wobble bearing (13) are located between the saw (14, 15) and the motor (12).

According to another preferred embodiment of the present invention, an electric pruner saw is provided, wherein the total mass of the slider (21-3) and the protrusion (21-1) is M1, and the mass of the saw is M2: the amplitude of vibration of the slider (21-3) is d1, and the amplitude of vibration of the saw is d2, wherein the following relations are satisfied:

$$M1 < M2;$$

$$d1 > d2.$$

According to another preferred embodiment of the present invention, an electric pruner saw is provided, wherein the following relation is satisfied:

$$M1*d1 = M2*d2 \qquad (1).$$

**Brief description of the drawings**

The present invention is explained in further detail below in conjunction with the drawings and embodiments; in the drawings:

Fig. 1 is a sectional view of an example of a pruner saw in the prior art.

Fig. 2 is a sectional view of an example of a pruner saw according to an embodiment of the present invention.

Fig. 3A is a front view of some components extracted from fig. 2 which are directly relevant to the present invention.

Fig. 3B is a perspective view, from behind, of the components shown in fig. 3A.

Fig. 4 is an exploded perspective view of the various components in fig. 3B, separated in the Y direction.

Fig. 5 is a perspective view, from below, of the wobble bearing and balancing component.

Fig. 6 is a perspective view, from above, of the wobble bearing.

Fig. 7A is a schematic drawing of the positions of the relevant components when the rotating rod of the wobble bearing is at a phase of 0°.

Fig. 7B is a schematic drawing of the positions of the relevant components when the rotating rod of the wobble bearing is at a phase of 180°.

Fig. 8 shows the results of actual measurement of the amplitudes of vibration of a pruner saw in the prior art and the pruner saw according to an embodiment of the present invention.

Fig. 9 shows a sectional view of the pruner saw according to another embodiment of the present invention.

**Detailed description of the invention**

To clarify the object, technical solution and advantages of the present invention, the present invention is explained in further detail below by means of embodiments in conjunction with the drawings. It should be understood that the particular embodiments described here are merely intended to explain the present invention, not to limit it.

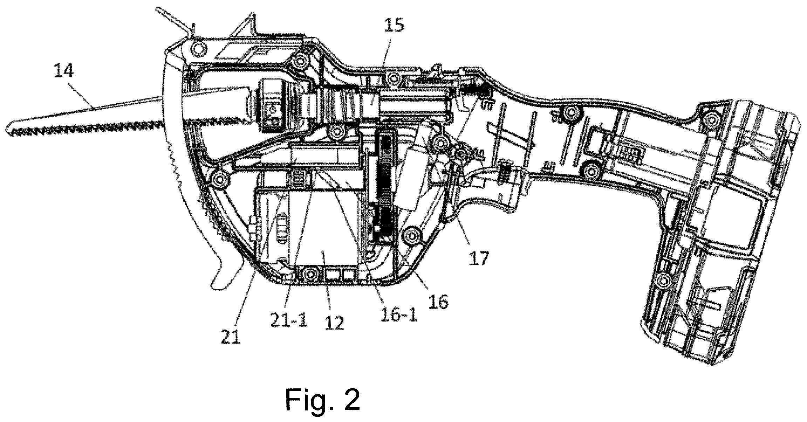

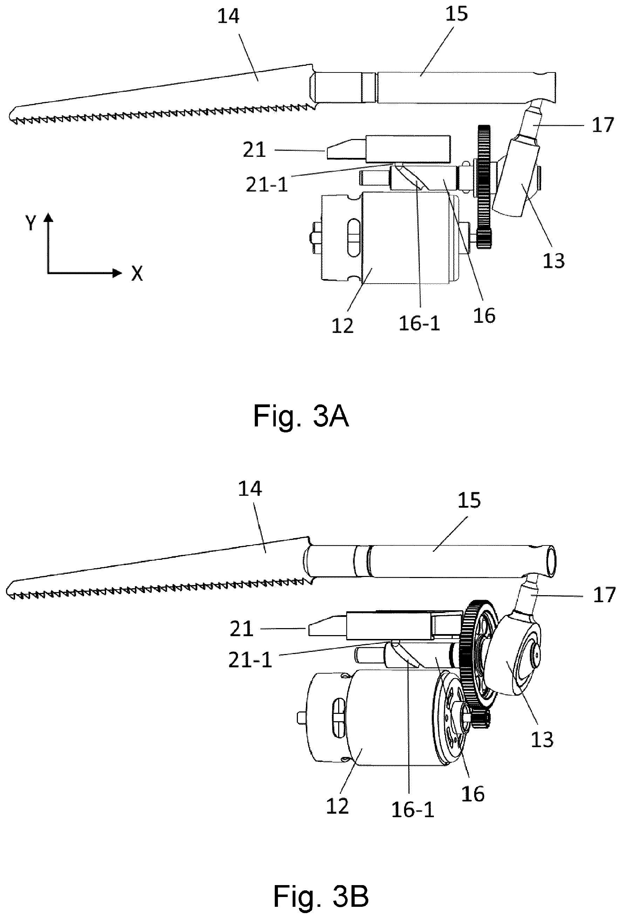

Fig. 2 shows a sectional view of an example of a pruner saw according to an embodiment of the present invention. The pruner saw shown in fig. 2 makes some improvements relative to the pruner saw in the prior art. First of all, unlike the prior art example shown in fig. 1, the position of the wobble bearing 13 in this embodiment has been moved upwards so as to be substantially above the motor 12 (this can be seen more clearly in the schematic drawing of a number of extracted components shown in fig. 3); the rotating rod 16 of the wobble bearing 13 is close to the motor 12, and located directly above the motor 12. This arrangement results in the wobble bearing 13 being closer to the saw rod 15, thereby shortening the length of the swing rod 17, and also results in the various components inside the housing 11 being arranged more compactly. Furthermore, a vibration suppression mechanism has been added in the pruner saw. In the prior art, vibration of the pruner saw is caused by reciprocating vibration of the saw in a longitudinal direction thereof. In order to suppress this vibration of the saw, the inventors of the present invention have designed a mechanism, employing a balancing component in such a way that when the saw vibrates, the balancing component and the saw vibrate synchronously but with opposite phases, thereby reducing the overall vibration amplitude of the pruner saw. This vibration suppression mechanism is presented in detail below.

For clarity, some components relevant to the present invention have been extracted from fig. 2 and are shown in a front view in fig. 3A, omitting any components that are not directly related to the content to be presented herein.

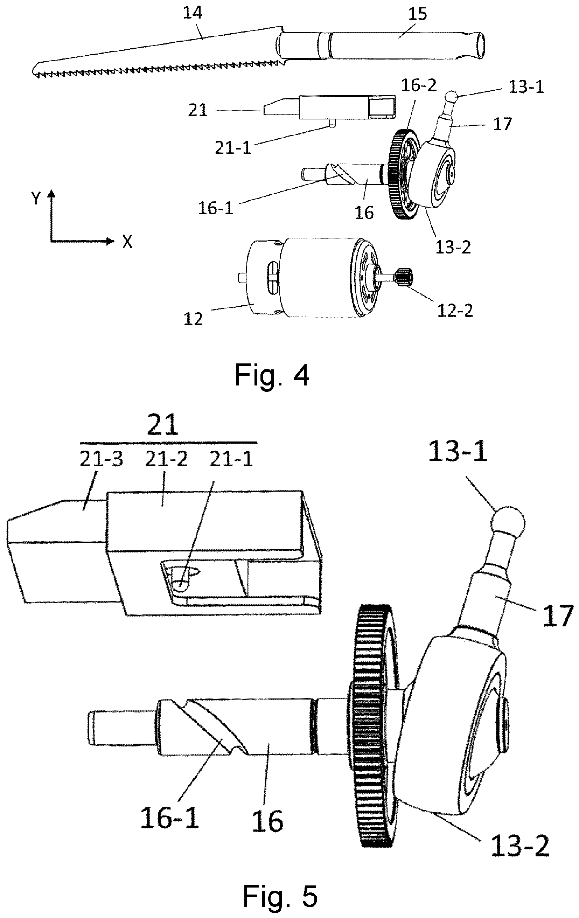

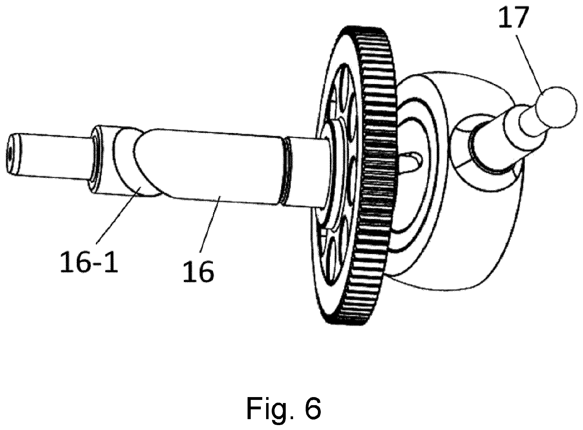

Referring to figs. 2 and 3A, the pruner saw of this embodiment further comprises a balancing component 21, on which is provided a protrusion 21-1. Furthermore, a groove 16-1 is provided on a surface of the rotating rod 16 of the wobble bearing 13, with the protrusion 21-1 on the balancing component being inserted into the groove 16-1. The groove 16-1 is formed in an encircling manner on an outer surface of the rotating rod 16, and takes the form of an inclined ring (the enlarged drawings in figs. 5 and 6 show the groove 16-1 more clearly). A cross section of the groove 16-1 may be, but is not limited to being, semicircular; correspondingly, a cross section of an end of the protrusion 21-1 has the same shape, such that the end of the protrusion 21-1 can just be inserted into the groove 16-1. When the groove 16-1 rotates with rotation of the rotating rod 16, a wall of the groove 16-1 applies a pushing force to the protrusion 21-1 inserted into the groove 16-1, thereby driving the balancing component 21 in linear reciprocating motion in an axial direction (i.e. the X direction) of the rotating rod 16.

In fig. 3A, the extracted components are coupled together. Fig. 3B shows a perspective view, from the right, of the various components coupled together in fig. 3A. Fig. 4 shows the various components in fig. 3B in a state of having been separated from one another, thus displaying more clearly the various independent components.

Again referring to figs. 3A, 3B and 4, a gear 12-2 is fixed to the output shaft of the motor 12, and another gear 16-2 is fixed to the rotating rod 16 of the wobble bearing 13; these two gears are meshed with each other as a transmission mechanism. When the output shaft of the motor 12 rotates, the rotating rod 16 of the wobble bearing 13 is driven to rotate by means of the two gears meshed with each other, and the swing rod 17 of the wobble bearing 13 is in turn driven to swing back and forth in the plane of the picture in fig. 3A. Since the spherical extremity of the swing rod 17 is rotatably coupled to the saw rod 15, the swinging of the swing rod 17 drives the saw (including the saw rod 15 and saw blade 14) to vibrate in a horizontal direction (i.e. the X direction).

In addition, the groove 16-1 is formed by processing on the outer surface of the rotating rod 16 in the embodiment shown in figs. 3A and 3B; fig. 3A shows a portion of the groove 16-1 located on a front-side surface of the rotating rod 16. This portion of the groove 16-1 is arranged in a spiral form on the front-side surface of the rotating rod 16, i.e. the groove 16-1 extends spirally along a front-side outer surface of the rotating rod 16 from a topmost part of the rotating rod 16 to a bottommost part of the rotating rod 16. Here, the topmost part of the rotating rod 16 is a horizontally extending straight line at the highest position on the cylindrical outer surface of the rotating rod 16 when the cylindrical rotating rod 16 lies in a horizontal direction (the X direction), and the bottommost part is a horizontally extending straight line at the lowest position of the cylindrical outer surface of the rotating rod 16 lying in the horizontal direction. Furthermore, another portion of the spiral groove 16-1 is provided on a rear-side surface of the rotating rod 16, being mirror-symmetrical with the portion of the groove 16-1 on the front-side surface; the two portions of the groove 16-1 are joined head-to-tail, thus forming a closed ring nested on the outer surface of the rotating rod 16. The closed ring is formed obliquely on the outer surface of the rotating rod 16.

Fig. 6 shows the wobble bearing 13 obliquely from above. It can be seen in fig. 6 that the two portions of the groove 16-1 at the front side and rear side of the rotating rod 16 are joined together smoothly at the topmost part of the rotating rod 16. Although not shown in fig. 6, it will be understood that the two portions of the groove 16-1 at the front side and rear side are likewise joined together smoothly at the bottommost part of the rotating rod 16. This closed ring may be formed by machining on the outer surface of the rotating rod 16.

In addition, it should be noted that as the rotating rod 16 rotates, a connection point of the two portions of the groove 16-1 that is initially located at the topmost part of the rotating rod 16 will gradually rotate to the bottommost part of the rotating rod 16, and at the same time, a connection point that is initially located at the bottommost part of the rotating rod 16 will gradually rotate to the topmost part of the rotating rod 16. In other words, as the rotating rod 16 rotates, all parts of the groove 16-1 in the form of the closed ring (or all points on the groove 16-1 if the groove 16-1 is approximately regarded as a line-like ring) successively rotate to the topmost part of the rotating rod 16, and then successively rotate to the bottommost part of the rotating rod 16, and this cycle is repeated.

The embodiment shown in figs. 3A, 3B and 4 further comprises the balancing component 21; the balancing component 21 is preferably arranged at an upper side of the rotating rod 16, in a position between the rotating rod 16 and the saw. Under the driving action of the rotating rod 16, the balancing component 21 can vibrate with an opposite phase as the saw vibrates, thereby suppressing the vibration of the entire electric pruning saw caused by vibration of the saw rod 15 and saw blade 14.

Fig. 5 is an enlarged perspective view, from below, of the balancing component 21 and wobble bearing, and shows more clearly the composition of the balancing component 21 and the positional relationship of the protrusion 21-1 of the balancing component 21 and the groove 16-1.

Referring to fig. 5, the balancing component 21 comprises a protrusion 21-1, a track 21-2 and a slider 21-3. The track 21-2 is mounted in a fixed manner in the housing 11, and the position of the track 21-2 relative to the wobble bearing 13 is fixed and does not change. The track 21-2 has an internal cavity, and the cross-sectional size and shape of the slider 21-3 are matched to the cross-sectional size and shape of the internal cavity of the track 21-2, such that the slider 21-3 can slide back and forth in one direction (the X direction in an embodiment) in the internal cavity of the track 21-2, and walls of the internal cavity of the track 21-2 limit the slider 21-3 so that it cannot move in another direction. The protrusion 21-1 is fixed to a lower surface of the slider 21-3, protruding from the lower surface of the slider 21-3, and passes through an opening of the track 21-2 on a lower surface. The height to which the protrusion 21-1 protrudes from the lower surface of the slider 21-3 is greater than the thickness of a bottom wall of the track 21-2, such that the slider 21-3 can be inserted into the groove 16-1 on the rotating rod 16 at the topmost part of the rotating rod 16.

In the embodiment above, the track 21-2 substantially has the shape of a box that is open at two ends and also has an opening at the bottom, but the present invention is not limited to this; the track 21-2 may also be another shape, as long as the track 21-2 can limit linear movement of the slider 21-3 parallel to the movement direction of the saw (the X direction).

In fig. 5, for greater clarity, the balancing component 21 and wobble bearing 13 are in a separated state. As will be understood, moving the balancing component 21 downwards causes the protrusion 21-1 to be inserted into the groove 16-1 on the rotating rod 16 at the topmost part of the rotating rod 16. With the protrusion 21-1 inserted into the groove 16-1 on the rotating rod 16, rotation of the rotating rod 16 causes the wall of the groove 16-1 to push the protrusion 21-1 to move. As stated above, the track 21-2 of the balancing component 21 is mounted in a fixed manner in the housing 11, and does not move relative to the rotating rod 16; under the pushing action of the wall of the groove 16-1, the protrusion 21-1 and slider 21-3 together reciprocate linearly in the horizontal direction (the X direction).

Those skilled in the art will readily understand that when the rotating rod 16 rotates through one revolution, one cycle of reciprocating motion of the protrusion 21-1 and slider 21-3 takes place, and at the same time, one cycle of swinging of the swing rod 17 of the wobble bearing 13 also takes place. The spherical extremity 13-1 of the swing rod 17 is rotatably coupled to the saw rod 15. Under the driving action of the swing rod 17, one cycle of reciprocating motion of the saw (the saw rod 15 and saw blade 14) also takes place. As can be seen, the vibration period of the balancing component 21 and the vibration period of the saw are the same.

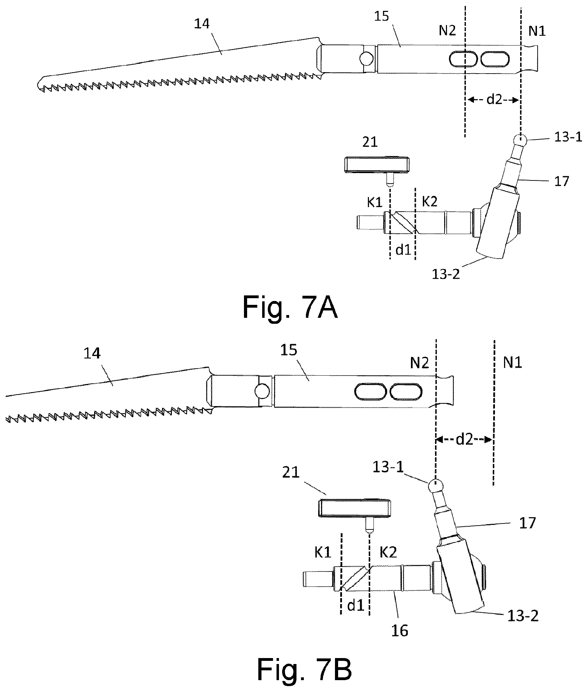

Figs. 7A and 7B show corresponding changes in position of the saw and the protrusion 21-1 and slider 21-3 when the phase of the rotating rod 16 is 0° and 180° (i.e. a half-cycle of rotation) respectively. For clarity, in the figure the saw, balancing component 21 and wobble bearing 13 are separated in the vertical direction (i.e. the Y direction), and the track 21-2 of the balancing component 21 and the gear on the wobble bearing 13 are omitted in the figure.

Referring to fig. 7A, when the phase of the rotating rod 16 is 0°, a leftmost point of the obliquely arranged annular groove 16-1 as described above (i.e. one connection point of the abovementioned two symmetrically arranged portions of the groove 16-1) is located at a point K1 at the topmost part of the rotating rod 16, and a rightmost point of the obliquely arranged annular groove 16-1 (i.e. the other connection point of the abovementioned two portions of the groove 16-1) is located at the bottommost part of the rotating rod 16. As stated above, the protrusion 21-1 is inserted into the groove 16-1 at the topmost part of the rotating rod 16; thus, the position of the protrusion 21-1 is the same as the position of a point of the groove 16-1 that is at the topmost part of the rotating rod 16. Clearly, when the phase of the rotating rod 16 is 0°, the position of the protrusion 21-1 in the horizontal direction is also located at point K1. At the same time, the swing rod 17 of the wobble bearing 13 swings to a rightmost position, such that the saw moves with the swing rod 17 to a rightmost position N1.

When the rotating rod 16 rotates through a half-revolution and the phase is 180°, referring to fig. 7B, the rightmost point of the groove 16-1 that was originally at the bottommost part of the rotating rod 16 when the phase was 0° rotates to a point K2 at the topmost part of the rotating rod 16. Correspondingly, the protrusion 21-1 also moves from point K1 to point K2. At the same time, the swing rod 17 swings to a leftmost position, driving the saw to move leftwards to a leftmost position N2.

In summary, as the wobble bearing 13 moves, the protrusion 21-1 and the slider 21-3 that is fixed to the protrusion 21-1 reciprocate linearly in the X direction between K1 and K2, and the saw reciprocates linearly between N1 and N2. The slider 21-3 (and protrusion 21-1) and the saw always move in opposite directions. The slider 21-3 and protrusion 21-1 vibrate at the same frequency as the saw, but with opposite phases (180° apart), and the overall vibration of the pruning saw is thereby reduced.

In the embodiment above, the balancing component 21 is linked to the swing rod 17 via the rotating rod 16, the groove 16-1 thereon and the protrusion 21-1 on the balancing component 21, such that the slider 21-3 of the balancing component 21 and that end of the swing rod 17 which is coupled to the saw rod 15 move with opposite phases. However, the present invention is not limited to this. It should be understood that the balancing component and the swing rod may be linked in any other way. For example, it can be imagined that no groove 16-1 is provided on the rotating rod 16 and no protrusion 21-1 is provided on the balancing component 21; instead, a side face of the slider 21-3 of the balancing component 21 is coupled via a suitable connecting rod mechanism (not shown) to a protrusion (not shown) on another end 13-2 of the swing rod 17 that is opposite the end 13-1 coupled to the saw rod 15, to transmit swinging motion of this other end via the connecting mechanism to reciprocating linear motion of the slider 21-3 in the track 21-2. Since the protrusion on this other end 13-2 of the swing rod 17 and the end 13-1 thereof coupled to the saw rod 15 move with opposite phases, the slider 21-3 linked in this manner also moves with an opposite phase to that of the end 13-1 of the swing rod 17 that is coupled to the saw rod 15, and thus moves with an opposite phase to that of the saw (14, 15), thereby achieving the effect of reducing the overall vibration of the pruner saw.

As another example, it can be imagined that no groove 16-1 is provided on the rotating rod 16, no protrusion 21-1 is provided on the balancing component 21, and no connecting rod mechanism is provided between the slider and the swing rod; instead, a transmission mechanism (e.g., a gear set) is provided between the balancing component 21 and the gear 16-2 fixed to the rotating rod 16, to transmit rotational motion of the gear 16-2 fixed to the rotating rod 16 to reciprocating linear motion of the slider 21-3 in the track 21-2.

In the embodiment above, the balancing component 21 comprises the track (21-2) and the slider (21-3) capable of moving linearly in the track (21-2). However, the present invention is not limited to this. It can be understood that the balancing component 21 may have another structure. For example, the balancing component 21 may merely be a counterweight, arranged at the other end 13-2 of the swing rod 17 that is opposite the end 13-1 coupled to the saw rod 15, and configured to balance the swing rod 17 and the saw, thereby reducing the overall vibration of the pruner saw.

Figs. 7A and 7B show the distance between K1 and K2 as being d1, i.e. the slider 21-3 (and protrusion 21-1) vibrate within the range of distance d1. Figs. 7A and 7B also show the distance between N1 and N2 as being d2, i.e. the saw vibrates within the range of distance d2. The distances d1 and d2 shown in figs. 7A and 7B are schematic, and not intended to define d2 > d1.

Suppose that the total mass of the slider 21-3 and protrusion 21-1 is M1, and that the total mass of the saw (the saw rod 15 and saw blade 14) is M2. In a preferred embodiment, preferably d1 > d2, M1 < M2. Choosing M1 to be less than the mass M2 of the saw helps to reduce the weight of the pruner saw as a whole.

In another preferred embodiment, M1, M2, d1 and d2 substantially satisfy the following relation:

$$M1*d1 = M2*d2 \qquad (1)$$

When the condition of formula (1) is satisfied, the momentum of the slider 21-3 and protrusion 21-1 while reciprocating is substantially equal to the momentum of the saw while vibrating, but the two momenta are in opposite directions; thus, the vibration of the slider 21-3 and protrusion 21-1 offsets the vibration of the saw to the maximum extent.

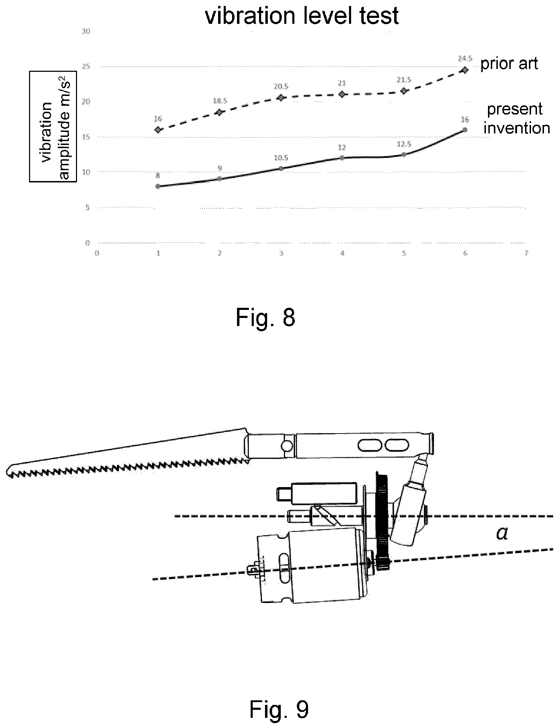

In order to actually test the vibration reduction effect of the pruner saw of the present invention, the vibration amplitudes of the pruner saw of the present invention and a pruner saw in the prior art have been actually measured herein; by comparing the measurement results, an obvious improvement in the vibration reduction effect by the present invention can be seen. In the actual measurement, a pruner saw serving as a comparative example is a pruner saw in the prior art, with no balancing component mounted therein; a pruner saw improved according to an embodiment of the present invention is the XI-type pruner saw in the prior art mentioned above with a balancing component of weight 1.1 kg mounted therein. The vibration acceleration amplitude (in units of m/s$^2$) at the handle, while sawing pine, of the pruner saw improved according to the present invention and the pruner saw in the prior art is measured. Fig. 8 shows the actual measurement results; the vertical axis in fig. 8 is the amplitude of vibration (acceleration) actually measured, while the horizontal axis represents different diameters of the pine being sawed. It can be seen from fig. 8 that for the various diameters of pine, the vibration amplitude of the pruner saw improved according to the present invention is reduced by about 50% compared with the pruner saw in the prior art.

Fig. 9 is a sectional view of a main body part of a pruner saw in another embodiment of the present invention. The difference between this embodiment and the embodiment shown in figs. 2 and 3 is that, in the embodiment shown in figs. 2 and 3, a rotating shaft of the motor 12 is parallel to the rotating rod 16 (i.e. the included angle therebetween is 0); in the embodiment shown in fig. 9, the motor 12 has been rotated anticlockwise through an angle α. Thus, an axis of the rotating shaft of the motor 12 and an axis of the rotating rod 16 of the wobble bearing 13 form an angle $\alpha$, the angle $\alpha$ being an acute angle. This makes the internal structure of the pruner saw more compact and the overall volume of the pruner saw smaller. Ranges of the angle $\alpha$ are 0.5-20 degrees, 1-15 degrees, 2-10 degrees, 2-8 degrees, 2-6 degrees, 3-5 degrees, and preferably 3 degrees.

In the various embodiments above, the rotating rod 16 of the wobble bearing 13 and the balancing component 21 are arranged between the saw and motor 12, but the present invention is not limited to this. The rotating rod 16 and balancing component 21 may also be arranged in another region; for example, the rotating rod 16 and balancing component 21 are arranged below the motor 12. However, the rotating rod 16 and balancing component 21 are preferably arranged between the saw and motor 12.

In the various embodiments above, the transmission mechanism comprises two gears, i.e. the gear 12-2 on the rotating shaft of the motor 12, and the gear on the rotating rod 16 of the wobble bearing 13, the two gears being meshed with each other, thereby transmitting rotation of the rotating shaft of the motor 12 to the rotating rod 16, such that the rotating rod 16 also rotates. The present invention is not limited to this; in another embodiment, the transmission mechanism may comprise a third gear, the third gear being separately meshed with the gear 12-2 on the rotating shaft of the motor 12 and the gear on the rotating rod 16, thereby transmitting rotation of the rotating shaft of the motor 12 to the rotating rod 16. In another embodiment, the transmission mechanism may comprise a greater number of gears, meshed with each other in a manner understandable to those skilled in the art, to achieve the effect of motive power transmission. In another embodiment, transmission may be effected via a transmission belt or any other suitable transmission mechanism.

In addition, it can also be imagined that the rotating rod 16 may be an extension of the output shaft of the motor 12 or a part of the output shaft, in which case the two transmission gears in the embodiment above need not be provided.

Although the present invention is explained by means of particular embodiments, those skilled in the art should understand that various changes and equivalent substitutions could be made to the present invention without departing from the scope thereof. Furthermore, various amendments could be made to the present invention for specific scenarios or materials, without departing from the scope of the present invention. Thus, the present invention is not limited to the particular embodiments disclosed, but should include all embodiments falling within the scope of the claims of the present invention.

## Claims

1. Electric pruner saw, comprising a motor (12), a wobble bearing (13) and a saw (14, 15), wherein the wobble bearing (13) comprises a rotating rod (16) and a swing rod (17), and the motor (12) can drive the rotating rod (16) to rotate via a transmission mechanism, and in turn drive the swing rod (17) to swing back and forth in a plane, thereby driving the saw (14, 15) to vibrate linearly, **characterized in that**:
the electric pruner saw further comprises a balancing component (21), the balancing component (21) comprising a part which vibrates with an opposite phase to that of the saw, for balancing the swing rod and the saw, and thereby reducing the overall vibration of the pruner saw.

2. Electric pruner saw according to Claim 1, **characterized in that** the balancing component (21) further comprises a track (21-2), wherein the part which vibrates with an opposite phase to that of the saw comprises a slider (21-3) capable of moving linearly in the track (21-2), and the balancing component (21) is linked to the swing rod (17), such that the slider (21-3) vibrates linearly along the track (21-2) with an opposite phase to that of the linear vibration of the saw (14, 15).

3. Electric pruner saw according to Claim 2, **characterized in that** the balancing component (21) further comprises a protrusion (21-1) mounted to the slider (21-3) in a fixed manner, the protrusion (21-1) protruding from a surface of the slider (21-3);
an annular groove (16-1) is formed on an outer surface of the rotating rod (16), the groove (16-1) being formed obliquely relative to the rotating rod (16);
the balancing component (21) is arranged close to the rotating rod (16), such that the protrusion (21-1) is inserted into the groove (16-1), and under the driving action of the motor (12), when the rotating rod (16) rotates, a wall of the groove (16-1) pushes the protrusion (21-1), such that the slider (21-3) and the protrusion (21-1) vibrate linearly along the track (21-2).

4. Electric pruner saw according to Claim 2 or 3, wherein the saw (14, 15) is arranged at an upper side of the motor (12), and the balancing component (21) and the wobble bearing (13) are arranged at a lower side of the motor (12).

**5.** Electric pruner saw according to Claim 2 or 3, wherein the saw (14, 15) is arranged at an upper side of the motor (12), and the balancing component (21) and the wobble bearing (13) are also arranged at the upper side of the motor (12), such that the balancing component (21) and the rotating rod (16) of the wobble bearing (13) are located between the saw (14, 15) and the motor (12).

**6.** Electric pruner saw according to Claim 3, wherein the track (21-2) has the shape of a hollow box, such that the slider (21-3) can move linearly through a hollow space of the track (21-2), and a side wall of the track (21-2) has an opening, the protrusion (21-1) extending out through the opening so as to be inserted into the groove (16-1).

**7.** Electric pruner saw according to Claim 3, wherein the total mass of the slider (21-3) and the protrusion (21-1) is M1, and the mass of the saw is M2: the amplitude of vibration of the slider (21-3) is d1, and the amplitude of vibration of the saw is d2, wherein the following relations are satisfied:

$$M1<M2;$$

$$d1>d2.$$

**8.** Electric pruner saw according to Claim 7, wherein d1, d2, M1 and M2 satisfy the following relation:

$$M1*d1=M2*d2 \qquad (1).$$

**9.** Electric pruner saw according to Claim 2 or 3, wherein a rotation axis of the motor (12) and a rotation axis of the rotating rod (16) are parallel or form an angle $\alpha$.

Fig. 1

EP 3 831 193 A1

Fig. 2

Fig. 3A

Fig. 3B

**Fig. 4**

**Fig. 5**

17

16-1

16

Fig. 6

14 15 N2 N1

d2

21

K1 K2

d1

13-1

17

13-2

## Fig. 7A

14 15 N2 N1

d2

21

13-1

17

K1 K2

d1

16

13-2

## Fig. 7B

Fig. 8

Fig. 9

Europäisches
Patentamt

European
Patent Office

Office européen
des brevets

# EUROPEAN SEARCH REPORT

Application Number

EP 20 21 1303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/182871 A1 (HAMAN BRIAN K [US]) 3 July 2014 (2014-07-03) | 1,2,4,5,9 | INV. A01G3/08 B25D11/06 |
| A | * abstract; figures 1-8 * * paragraph [0019] - paragraph [0022] * * paragraph [0047] - paragraph [0051] * ----- | 3,6-8 | |
| X | US 2015/033565 A1 (WANG YANCHAO [CN]) 5 February 2015 (2015-02-05) | 1 | |
| A | * the whole document * ----- | 2-9 | |
| X | US 5 025 562 A (PALM BERNHARD [US]) 25 June 1991 (1991-06-25) | 1 | |
| A | * the whole document * ----- | 2-9 | |
| X | US 3 945 120 A (RITZ ALAN J) 23 March 1976 (1976-03-23) | 1 | |
| A | * the whole document * ----- | 2-9 | |
| X | US 5 782 000 A (BEDNAR THOMAS R [US]) 21 July 1998 (1998-07-21) | 1 | |
| A | * the whole document * ----- | 2-9 | TECHNICAL FIELDS SEARCHED (IPC) |
| X | EP 0 949 033 A2 (BLACK & DECKER INC [US]) 13 October 1999 (1999-10-13) | 1 | A01G B25D |
| A | * the whole document * ----- | 2-9 | B23D |
| A | US 2002/059732 A1 (CAMPBELL DAVID C [US] ET AL) 23 May 2002 (2002-05-23) * the whole document * ----- | 1-9 | |

The present search report has been drawn up for all claims

| Place of search | Date of completion of the search | Examiner |
|---|---|---|
| The Hague | 21 April 2021 | Balzar, Maarten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 1303

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2021

| Patent document cited in search report | | Publication date | Patent family member(s) | | Publication date |
|---|---|---|---|---|---|
| US 2014182871 | A1 | 03-07-2014 | CN 105377510 A | | 02-03-2016 |
| | | | EP 2938465 A1 | | 04-11-2015 |
| | | | US 2014182871 A1 | | 03-07-2014 |
| | | | WO 2014106139 A1 | | 03-07-2014 |
| US 2015033565 | A1 | 05-02-2015 | CN 104339031 A | | 11-02-2015 |
| | | | DE 102014208918 A1 | | 05-02-2015 |
| | | | US 2015033565 A1 | | 05-02-2015 |
| US 5025562 | A | 25-06-1991 | DE 4106415 A1 | | 02-10-1991 |
| | | | FR 2678038 A1 | | 24-12-1992 |
| | | | GB 2256905 A | | 23-12-1992 |
| | | | JP 2860173 B2 | | 24-02-1999 |
| | | | JP H04217418 A | | 07-08-1992 |
| | | | US 5025562 A | | 25-06-1991 |
| US 3945120 | A | 23-03-1976 | NONE | | |
| US 5782000 | A | 21-07-1998 | AT 216301 T | | 15-05-2002 |
| | | | DE 69712058 T2 | | 31-10-2002 |
| | | | EP 0907446 A1 | | 14-04-1999 |
| | | | JP 2000503914 A | | 04-04-2000 |
| | | | US 5782000 A | | 21-07-1998 |
| | | | WO 9741989 A1 | | 13-11-1997 |
| EP 0949033 | A2 | 13-10-1999 | EP 0949033 A2 | | 13-10-1999 |
| | | | EP 1593448 A1 | | 09-11-2005 |
| | | | US 6286217 B1 | | 11-09-2001 |
| US 2002059732 | A1 | 23-05-2002 | CA 2344016 A1 | | 21-10-2001 |
| | | | US 2002059732 A1 | | 23-05-2002 |
| | | | US 2002095799 A1 | | 25-07-2002 |

EPO FORM P0459

For more details about this annex : see Official Journal of the European Patent Office, No. 12/82